# EUROPEAN PATENT SPECIFICATION

(11) **EP 2 628 514 B1**
(45) Date of publication and mention of the grant of the patent: **22.10.2014**
(21) Application number: 13155826.4
(22) Date of filing: 19.02.2013
(51) Int. Cl.: A63J 25/00

(54) **System for controlling seat effect for facility for showing pictures**
System zur Steuerung des Sitzeffekts für Anlage zum Zeigen von Bildern
Système permettant de commander un effet de siège dans une installation pour montrer des images

(30) Priority: 20.02.2012 KR 20120016887
(43) Date of publication of application: 21.08.2013
(73) Proprietor: CJ 4dplex Co., Ltd., Seoul 122-935 (KR)
(72) Inventor: Choi, Jae Sung, 305-330 Daejeon (KR); Park, Jin Yong, 420-020 Gyeonggi-do (KR)
(74) Representative: Hague, Alison Jane

(56) References cited:
- WO-A1-2011/162448
- CN-U- 201 643 743
- US-A- 3 865 430
- US-A1- 2010 205 867
- US-A1- 2011 170 945

## Description

### [Technical Field]

The present disclosure relates to a system for controlling a seat effect for a facility for showing pictures, and particularly, a system for controlling a seat effect for a facility for showing pictures for a user on a rear-line seat to easily and safely control an effect provided to the user himself/herself even while a seat is in motion operation while showing pictures by controlling an effect synchronized with pictures by relaying effect control information inputted from the user on the rear-line seat by using an effect controlling device of a front-line seat, in the facility for showing pictures, which provides the effect (for example, a water shot, an air shot, or a scent) synchronized with the pictures to the user on the rear-line seat.

### [Background Art]

In a facility for showing pictures, such as a theater or a cinema, only the pictures were shown to spectators in the related art, but various effects have been provided to the spectators while the pictures have been shown in recent years.

A cinema for showing general pictures is a 2D cinema and a cinema for showing specially photographed pictures for the spectators to feel a 3D effect at the time of viewing the pictures is a 3D cinema, and a cinema for the spectators to view the pictures while feeling five senses by simulating the sense of touch, the sense of smell, and the like in addition to the senses of sight and hearing is a 4D cinema.

In the 4D cinema, a motion base that moves a seat on which the spectator sits is installed below the seat and special effect devices providing various effects to the spectators are installed on the seats and inner walls or a ceiling of the cinema.

When the spectator views a movie while sitting on the seat, the spectator may feel improved excitement and immersiveness in the movie while directly experiencing the motion synchronized with the picture and effects such as water, wind, smoke, flash, heat, and the like, not viewing only the picture.

In the 4D cinema which is being operated at present, a plurality of seat sets is placed, and the seat sets includes 4D effect devices that shoot water, wind, or scent installed on a back surface of a seat set positioned at a front line in addition to the motion bases. These 4D effect devices shoot materials that take a 4D effect to a spectator who sits on a seat set positioned on a rear line, from the back surface of the seat set positioned on the front line. An exemplary motion seat assembly for a 4D cinema is disclosed in WO 2011/162448 A1.

These 4D effect devices are controlled by a central device that controls the entire cinema and provide the same 4D effect to each of the spectators.

WO 2011/162448 A1 teaches that an emergency button may be provided to send a stop signal to all seats in the cinema, or an individual row of seats, that stops the 4D effects in the event of an unexpected situation, for example the need to remove a spectator who has had an accident. However, some of the spectators may simply dislike the 4D effect that is shot to their own faces. When the same 4D effect is provided to all the spectators, the 4D effect may cause displeasure in some spectators while showing the movie. Some spectators like the 4D effect, but when the 4D effect is provided more strongly than their own tastes, immersiveness on the movie which the spectator feels may be decreased.

Meanwhile, a plurality of seat sets installed in the 4D cinema is positioned to be adjacent for each of front lines and rear lines. In this case, a spectator who sits on the rear-line seat is unable to easily control the 4D effect device installed on the rear-line seat which the spectator himself/herself sits on while showing the pictures. If a switch for controlling the 4D effect shot from the front-line seat is attached to the front-line seat, the spectator who sits on the rear-line seat needs to control the 4D effect device attached to the back surface of the front-line seat by moving to the front-line seat in order to control the 4D effect provided to the spectator himself/herself. In the case where the seat is in motion operation, there is a risk that the spectator will be dropped or injured.

In order to solve the problem, wiring may be connected for each of front/rear-line seats of all the seat sets, but the wiring may be complicated between the seats and a problem may arise or a trouble may occur in the wiring due to the motion operation of the seats. Moreover, in the case where the wiring for controlling the 4D effect devices has already been installed complicatedly for each front/rear-line seat, if a new wiring for controlling the front-line seat on the rear-line seat is installed, the wiring becomes even more complicated.

Meanwhile, in the seats installed in the facility for showing the pictures, which provide the 4D effect in the related art, the spectator at the rear line is unable to optionally select the strength or type of the 4D effect that is shot from the front-line seat. All the spectators are provided with the 4D effect having the same type or strength because the spectator is unable to select the type or strength which the spectator himself/herself likes among the 4D effects.

### [Disclosure]

### [Technical Problem]

The present disclosure has been made in an effort to provide a system for controlling a seat effect for a facility for showing pictures for a user on a rear line to easily and safely control an effect provided to the user himself/herself even while a seat is in motion operation at the time of showing pictures by controlling an effect synchronized with pictures by relaying effect control information inputted from the user on the rear-line seat by using an effect controlling device of a front-line seat, in the facility for showing pictures, which provides the effect (for example, a water shot, an air shot, or a scent) synchronized with the pictures to the user on the rear-line seat.

### [Technical Solution]

According to a first aspect of the present disclosure, there is provided a system for controlling a seat effect according to claim 1.

According to a second aspect of the present disclosure, there is provided a system for controlling a seat effect according to claim 2.

### [Advantageous Effects]

According to exemplary embodiments of the present disclosure, a user on a rear line can easily and safely control an effect provided to the user himself/herself even while a seat is in motion operation at the time of showing pictures by controlling an effect synchronized with pictures by relaying effect control information inputted from the user on the rear-line seat by using an effect controlling device of a front-line seat, in the facility for showing pictures, which provides the effect (for example, a water shot, an air shot, or a scent) synchronized with the pictures to the user on the rear-line seat.

Further, by relaying or transmitting/receiving effect control information through a wireless communication network or a wired communication network which has already been installed, the 4D effect is thereby prevented from being stopped because the wiring is not additionally connected between motion seats even in a facility for showing pictures where a wiring is connected complicatedly in advance, and thus a trouble arises in the wiring due to the motion operation of the seat.

Furthermore, the user who sits on the rear-line seat conveniently selects the strength or type of the 4D effect from the front-line seat while showing the pictures to reduce displeasure caused due to the 4D effect at the time of showing the pictures, thereby increasing immersiveness of the pictures.

### [Description of Drawings]

FIG. 1 is an exemplary diagram of a seat in a facility for showing pictures applied to the present disclosure.
FIG. 2 is an explanatory diagram of a seat layout in the facility for showing pictures according to the exemplary embodiment of the present disclosure.
FIG. 3 is a configuration diagram of a system for controlling a seat effect for a facility for showing pictures according to a first exemplary embodiment of the present disclosure.
FIG. 4 is a detailed configuration diagram of an effect providing unit of FIG. 3 according to the exemplary embodiment of the present disclosure.
FIG. 5 is a configuration diagram of a system for controlling a seat effect for a facility for showing pictures according to a second exemplary embodiment of the present disclosure.
FIG. 6 is a flowchart of a method for controlling a seat effect for the facility for showing pictures according to the first exemplary embodiment of the present disclosure.
FIG. 7 is a flowchart of a method for controlling a seat effect for the facility for showing pictures according to the second exemplary embodiment of the present disclosure.

### [Best Mode]

Hereinafter, exemplary embodiments of the present disclosure will be described in detail with reference to the accompanying drawings. The configurations of the present disclosure and the resulting operational effects will be apparently appreciated through the detailed description described as below. Prior to the detailed description of the present disclosure, like reference numerals refer to like elements as possible even though like elements are shown in different drawings and it is noted that a detailed description of the known configurations will be omitted when it is judged that the known configurations may obscure the spirit of the present disclosure.

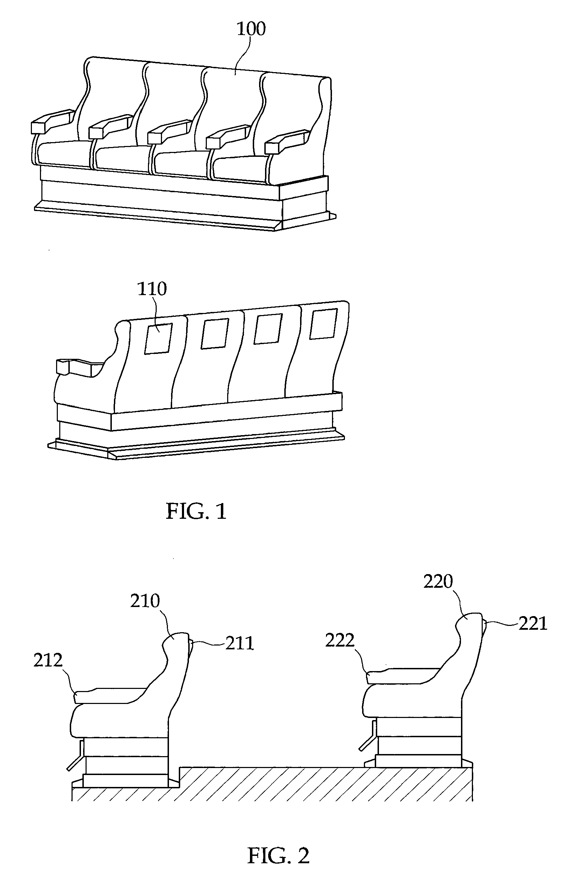

FIG. 1 is an exemplary diagram of a seat in a facility for showing pictures applied to the present disclosure.

In one example of the facility for showing pictures applied to the present disclosure, a plurality of seats constitute one seat set 100. For example, FIG. 1 illustrates a structure in which four seats constitute one seat set 100. The seat set 100 is placed as a plurality of lines arranged in tiers from a screen side of the facility for showing pictures. The exemplary embodiment of the present disclosure may be applied to even the facility for showing pictures in which seats at the plurality of lines are arranged one by one as well as the seat set.

Herein, the seat installed in the facility for showing pictures includes a shooting device 110 that shoots water, wind or scent from a back surface of a seat positioned at a front line as well as a motion base. The shooting device 110 shoots water, wind or scent that causes a 4D effect to a user who sits on the seat from the back surface of the front-line seat.

FIG. 2 is an explanatory diagram of a seat layout in the facility for showing pictures according to the exemplary embodiment of the present disclosure.

As illustrated in FIG. 2, a front-line seat 210 and a rear-line seat 220 are installed on a floor of the facility for showing pictures in tiers in the facility for showing pictures. The exemplary embodiment of the present disclosure may be applied to a facility for showing pictures in which the front-line seat 210 and the rear-line seat 220 are disposed by a predetermined distance.

As one example, the front-line seat 210 includes a selection switch 212 that enables the user to control the 4D effect and a shooting device 211 installed on the back surface of the seat. Further, the rear-line seat 220 includes a selection switch 222 that enables the user to control the 4D effect and a shooting device 221 installed on the back surface of the seat.

The user who sits on the rear-line seat 220 receives the 4D effect through the shooting device 211 installed on the back surface of the front-line seat 210. In this case, the user who sits on the rear-line seat 220 may control or turn on/off the 4D effect (for example, an air shot, a water shot or a scent) provided from the shooting device 211 of the front-line seat 210 through the selection switch 222.

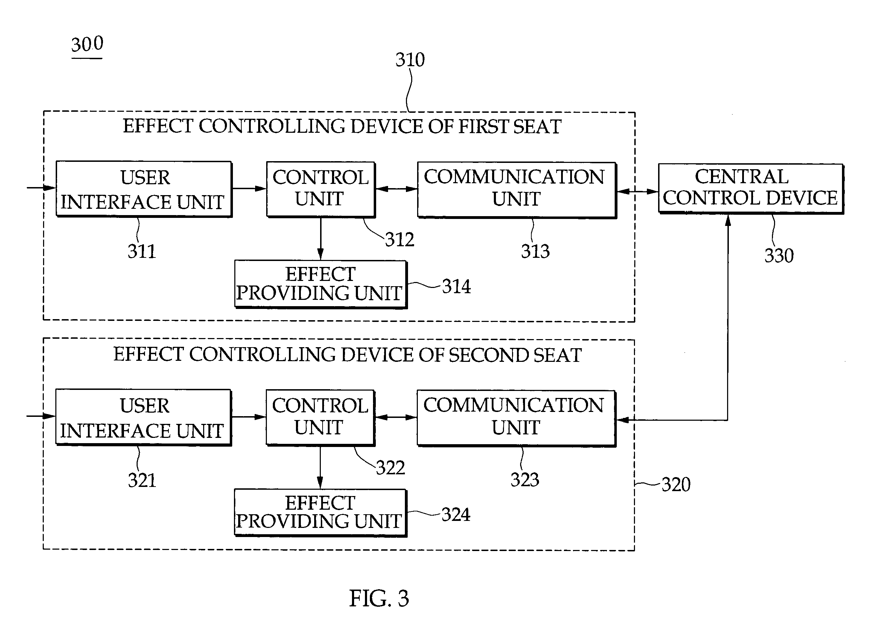

FIG. 3 is a configuration diagram of a system for controlling a seat effect for a facility for showing pictures according to a first exemplary embodiment of the present disclosure.

As illustrated in FIG. 3, a system 300 for controlling the seat effect in the facility for showing pictures according to the exemplary embodiment of the present disclosure includes a central control device 330, an effect controlling device 320 of the front-line seat (hereinafter, referred to as a 'second seat'), and an effect controlling device 310 of the rear-line seat (hereinafter, referred to as a 'first seat').

The effect controlling system 300 according to the exemplary embodiment of the present disclosure transmits inputted effect control information to the effect controlling device 320 of the second seat through the central control device 330 when the user who sits on the first seat inputs the effect control information in the effect controlling device 310 of the first seat. Subsequently, the effect controlling device 320 of the second seat controls the 4D effect according to the effect control information which the user who sits on the first seat inputs.

Hereinafter, each of constituent members of the effect controlling system 300 according to the first exemplary embodiment of the present disclosure will be described.

The effect controlling device 310 of the first seat transmits the effect control information inputted by the user to a predetermined network address of the central control device 330. The effect controlling device 310 of the first seat stores a main path of the network of the central control device 330 in advance.

The central control device 330 relays the effect control information received from the effect controlling device 310 of the first seat to the effect controlling device 320 of the second seat with the predetermined network address. The central control device 330 prestores a network address of the effect controlling device 320 of the second seat positioned at the front line of the first seat.

The effect controlling device 320 of the second seat provides an effect synchronized with a picture to the user who sits on the first seat positioned at the front line of the first seat. In this case, when the effect controlling device 320 of the second seat receives the effect control information relayed through the central control device 330, the effect controlling device 320 of the second seat controls the 4D effect according to the received effect control information.

To this end, the effect controlling device 310 of the first seat includes a user interface unit 311, a control unit 312, a communication unit 313 and an effect providing unit 314. The effect controlling device 320 of the second seat includes a user interface unit 321, a control unit 322, a communication unit 323 and an effect providing unit 324.

Constituent members of each of the effect controlling device 310 of the first seat and the effect controlling device 320 of the second seat will be described in sequence.

The user interface unit 311 of the effect controlling device 310 of the first seat is constituted by a selection switch for the user to input the effect control information and the like. The user interface unit 311 selects on/off, the type and the strength, and the like of the 4D effect which the user desires, by the user's selection.

The communication unit 313 communicates with the central control device 330 through the network to transmit the effect control information. In this case, the network is connected through short-range wired and wireless communication networks, and is not limited to a specific communication network.

The effect providing unit 314 provides the 4D effect to the user who sits on the rear-line seat of the first seat.

The control unit 312 transmits the effect control information to the communication unit 313 so that the effect control information inputted through the user interface unit 311 is transmitted to the network address of the central control device 330.

The control unit 312 controls the 4D effect provided to the user by controlling the effect providing unit 314.

Meanwhile, in the effect controlling device 320 of the second seat, the communication unit 323 communicates with the central control device 330 to receive the effect control information transmitted from the effect controlling device 310 of the first seat. Herein, the communication unit 323 is connected with the central control device 330 through the network in advance. In this case, the network is connected through short-range wired and wireless communication networks, and is not limited to a specific communication network.

The effect providing unit 324 provides an effect synchronized with the picture to the user who sits on the first seat in the facility for showing pictures. For example, the effect providing unit 324 may provide at least one of a water shot effect, an air shot effect and the scent effect to the user.

In this case, when the control unit 322 receives the effect control information received through the communication unit 323, the control unit 322 controls the effect providing unit 324 according to the effect control information. The control unit 322 may receive the effect control information including at least one of whether or not a seat effect is provided, the effect type and the effect strength.

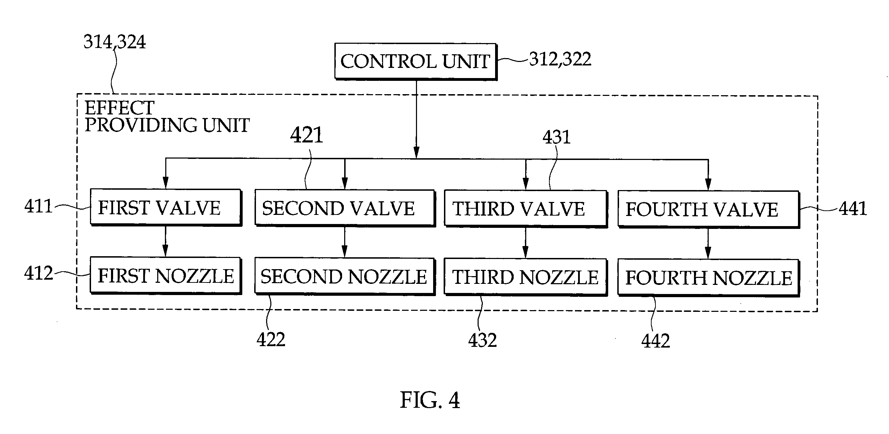

FIG. 4 is a detailed configuration diagram of the effect providing unit of FIG. 3 according to the exemplary embodiment of the present disclosure.

As illustrated in FIG. 4, the effect providing units 314 and 324 include first to fourth valves 411, 421, 431 and 441 and first to fourth nozzles 412, 422, 432 and 442.

The effect providing units 314 and 324 are connected with the control units 312 and 322 of each seat, respectively. The effect providing unit 324 of the second seat of the effect providing units 314 and 324 will be described below.

The first to fourth valves 411, 421, 431 and 441 of the effect providing unit 324 are connected with the control unit 322, respectively and controlled by the control unit 322. In the case where the second seat is placed as the seat set, when the control unit 322 controls the valve connected with the second seat in the seat set, a flow rate of the nozzle connected with the valve may be controlled. The first to fourth valves 411, 421, 431 and 441 are installed in the seat set in which first to fourth seats are configured as one set and installed on back surfaces of the first to fourth seats. The first to fourth valves 411, 421, 431 and 441 control flow rates ejected from the corresponding nozzles among the first to fourth nozzles 412, 422, 432 and 442, respectively.

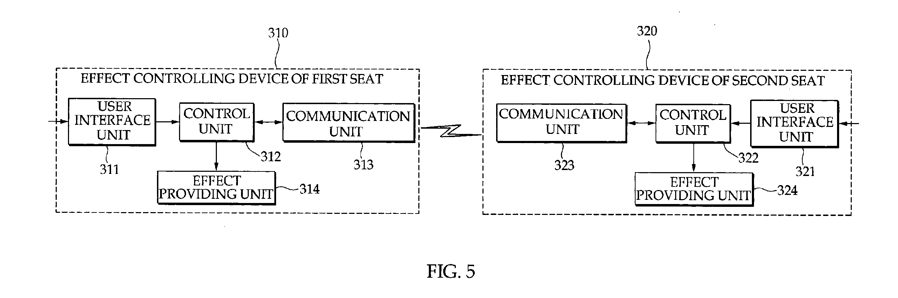

FIG. 5 is a configuration diagram of a system for controlling a seat effect for a facility for showing pictures according to a second exemplary embodiment of the present disclosure.

Hereinafter, contents duplicated with the first exemplary embodiment of the present disclosure are the same as described above and the effect controlling system according to the second exemplary embodiment will be described among parts which are different from those of the first exemplary embodiment.

As illustrated in FIG. 5, the effect controlling device 310 of the first seat and the effect controlling device 320 of the second seat are network-connected to each other through the wireless communication in advance. For example, the effect controlling device 310 of the first seat and the effect controlling device 320 of the second seat may be connected through the short-range wireless communication such as Zigbee, Bluetooth or the like.

The communication unit 313 of the effect controlling device 310 of the first seat and the communication unit 323 of the effect controlling device 320 of the second seat are network-connected to each other through the short-range wireless communication. In this case, the effect controlling devices 310 and 320 store, in advance, the network addresses of the effect controlling devices which the effect controlling devices 310 and 320 will transmit or receive for each of the seats placed at the front and rear sides.

The communication unit 313 of the effect controlling device 310 of the first seat transmits the 4D effect control information inputted by the user to a predetermined network address of the effect controlling device 320 of the second seat. That is, the communication unit 313 of the first seat is connected with the communication unit 323 of the second seat through network connection and the communication unit 323 of the second seat receives the effect control information from the communication unit 313 of the first seat.

The effect controlling device 320 of the second seat provides the effect synchronized with the picture to the user who sits on the first seat with a predetermined network address, while controlling the 4D effect according to the effect control information transmitted from the effect controlling device 310 of the first seat.

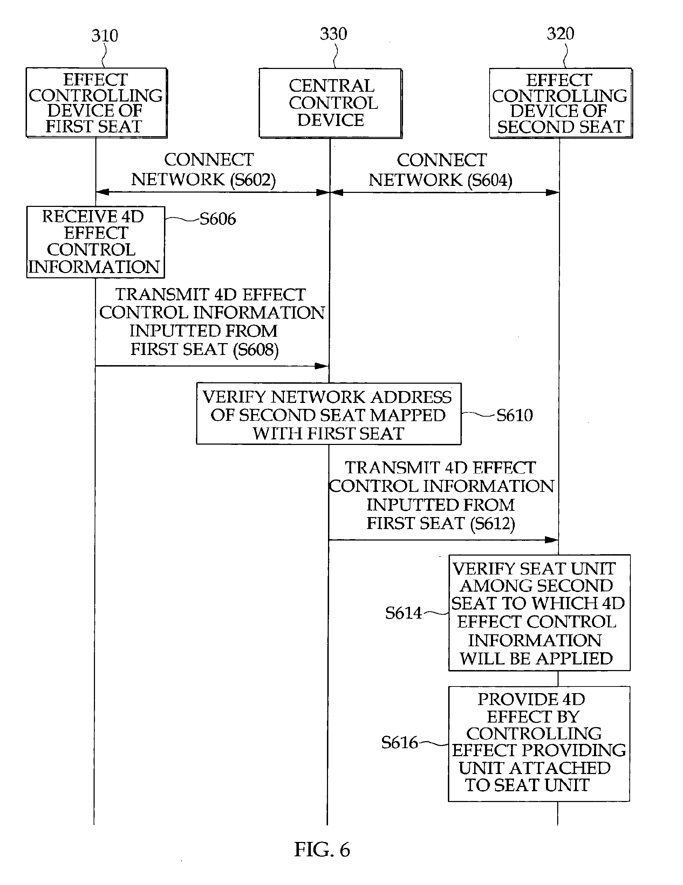

FIG. 6 is a flowchart of a method for controlling a seat effect for the facility for showing pictures according to the first exemplary embodiment of the present disclosure.

The effect controlling device 310 of the first seat is connected with the central control device 330 through the network (S602). The effect controlling device 320 of the second seat is connected with the central control device 330 through the network (S604). Herein, the network may be connected through the wired/wireless communication networks.

The effect controlling device 310 of the first seat verifies whether the user controls the 4D effect through the selection switch and the like and receives the 4D effect control information from the user (S606).

The effect controlling device 310 of the first seat transmits the 4D effect control information inputted from the first seat to the predetermined network address of the central control device 330 (S608).

The central control device 330 verifies the network address of the effect controlling device 320 of the second seat mapped with the first seat (S610). A mapping table of the network addresses among the seats to which the effect control information need to be transmitted is stored.

Subsequently, the central control device 330 transmits the 4D effect control information inputted from the first seat, to the network address of the effect controlling device 320 of the second seat (S612).

The effect controlling device 320 of the second seat verifies a corresponding seat unit among the second seats to which the 4D effect control information will be applied (S614).

Subsequently, the effect controlling device 320 of the second seat provides the 4D effect to the user by controlling the effect providing unit attached to the seat unit (S616).

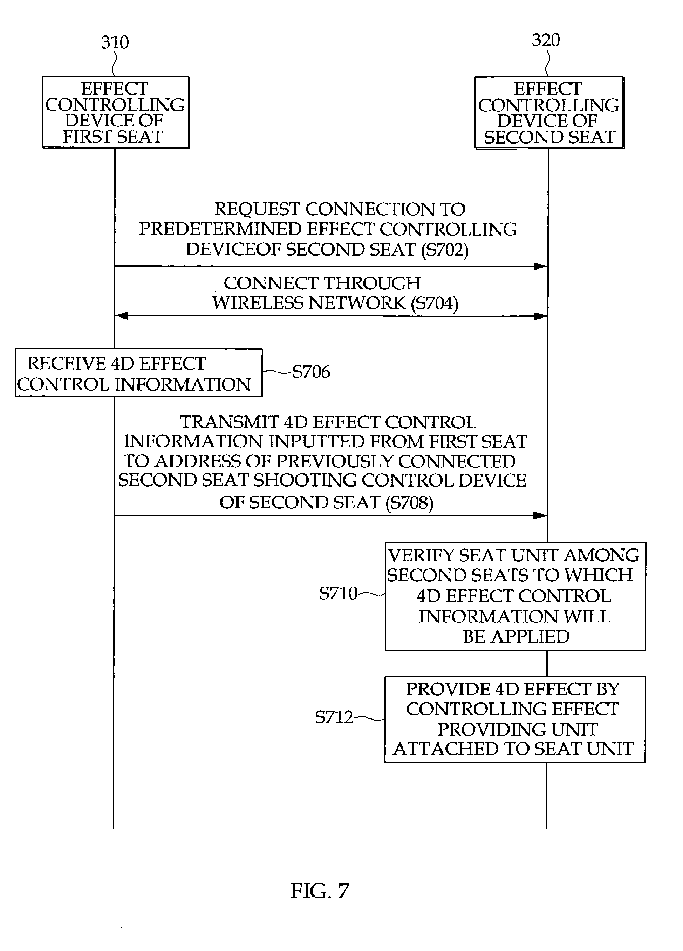

FIG. 7 is a flowchart of a method for controlling a seat effect for the facility for showing pictures according to the second exemplary embodiment of the present disclosure.

The effect controlling device 310 of the first seat requests connection with the predetermined effect controlling device 320 of the second seat (S702).

The effect controlling device 310 of the first seat and the effect controlling device 320 of the second seat are connected through the wireless network (S704).

The effect controlling device 310 of the first seat receives the 4D effect control information from the user (S706).

The effect controlling device 310 of the first seat verifies a previously connected network address of the effect controlling device 320 of the second seat and transmits the 4D effect control information to the verified network address of the effect controlling device 320 of the second seat (S708).

The effect controlling device 320 of the second seat verifies a corresponding seat unit among the second seats to which the 4D effect control information will be applied (S710).

Subsequently, the effect controlling device 320 of the second seat provides the 4D effect to the user by controlling the effect providing unit attached to the seat unit (S712).

From the foregoing, it will be appreciated that various embodiments of the present disclosure have been described herein for purposes of illustration, and that various modifications may be made without departing from the scope of the present invention. Therefore, the exemplary embodiments disclosed in the specification of the present disclosure do not limit the present invention. The scope of the present invention is defined by the appended claims and it should be understood that all embodiments within their scope are included in the scope of the present invention.

### [Industrial Applicability]

The present disclosure relates to a system for controlling a seat effect for a facility for showing pictures, and particularly, a user on a rear line may easily and safely control an effect provided to the user himself/herself even while a seat is in motion operation at the time of showing pictures by controlling an effect synchronized with pictures by relaying effect control information inputted from the user on the rear-line seat by using an effect controlling device of a front-line seat, in the facility for showing pictures, which provides the effect (for example, a water shot, an air shot, or a scent) synchronized with the pictures to the user on the rear-line seat. From this point of view, as the present disclosure exceeds a limit of an existing technology, marketing or business possibility of an applied apparatus as well as using an associated technology is sufficient and the present disclosure can be obviously worked, and thus the present disclosure has industrial applicability.

### [Description of Main Reference Numerals of Drawings]

- 310:: Effect controlling device of first seat
- 330:: Central control device
- 311:: User interface unit
- 312:: Control unit
- 313:: Communication unit
- 314:: Effect providing unit
- 320:: Effect controlling device of second seat
- 321:: User interface unit
- 322:: Control unit
- 323:: Communication unit
- 324:: Effect providing unit

## Claims

1. A system for controlling a seat effect for a facility for showing pictures, comprising:
an effect controlling device (310) of a first seat (220) configured to transmit (S608) effect control information, including an effect type and whether or not a seat effect is provided or the effect strength, inputted from a user to a predetermined network address;
an effect controlling device (320) of a second seat (210) configured to be positioned at a front line of the first seat (220) to provide (S616) an effect synchronized with a picture to a user who sits on the first seat (220); and
a central control device (330) configured to receive (S608) the effect control information from the effect controlling device (310) of the first seat (220) with the predetermined network address, verify (S610) the network address of the effect controlling device (320) of the second seat (210) mapped with the first seat (220), and relay (S612) the received effect control information to the effect controlling device of the second seat (210),
wherein the effect controlling device (320) of the second seat (210) controls (S616) the seat effect of the first seat (220) in accordance with the effect control information relayed through the central control device (330).

2. A system for controlling a seat effect for a facility for showing pictures, comprising:
an effect controlling device (310) of a first seat (220) configured to transmit (S708) 4D effect control information inputted (S706) from a user to a predetermined network address; and
an effect controlling device (320) of a second seat (210) configured to control (S7-12) the provided effect in accordance with the effect control information transmitted from the effect controlling device of the first seat with a predetermined network address, while providing an effect synchronized with a picture to a user who sits on the first seat,
wherein the effect controlling device (310) of the first seat (220) and the effect controlling device (320) of the second seat (210) are, in advance, network-connected (S704) to each other through wireless communication.

3. The system for controlling a seat effect for a facility for showing pictures of claim 1, wherein:
the effect controlling device (320) of the second seat (210) controls a valve connected with the second seat corresponding to the received effect type, said valve controls a flow rate of a nozzle connected with the valve.

4. The system for controlling a seat effect for a facility for showing pictures of claim 2, wherein:
the effect controlling device (320) of the second seat (210) receives (S708) effect control information including the effect type and whether or not the seat effect is provided or the effect strength from the effect controlling device (310) of a first seat (220), controls a valve connected with the second seat corresponding to the received effect type of the effect control information in accordance with the received whether or not the seat effect is provided or the effect strength, and controls a flow rate of a nozzle connected with the valve.

5. The system for controlling a seat effect for a facility for showing pictures of any preceding claim, wherein:
the effect controlling device (320) of the second seat (210) provides at least one of a water shot effect, an air shot effect and a scent effect to the user.

## Patentansprüche

1. System zur Steuerung eines Sitzeffekts für eine Anlage zum Zeigen von Bildern, umfassend:
eine Effektsteuerungseinrichtung (310) eines ersten Sitzes (220), dafür eingerichtet, von einem Benutzer eingegebene Effektsteuerinformation, die eine Effektart und ob oder ob nicht ein Sitzeffekt bereitgestellt wird oder die Effektstärke enthält, an eine vorbestimmte Netzwerkadresse zu übertragen (S608);
eine Effektsteuerungseinrichtung (320) eines zweiten Sitzes (210), dafür eingerichtet, an einer Frontlinie des ersten Sitzes (220) positioniert zu sein, um einen Effekt, der mit einem Bild synchronisiert ist, an einen Benutzer, der auf dem ersten Sitz (220) sitzt, bereitzustellen (S616); und
eine Zentralsteuereinrichtung (330), dafür eingerichtet, die Effektsteuerinformation von der Effektsteuerungseinrichtung (310) des ersten Sitzes (220) mit der vorbestimmten Netzwerkadresse zu empfangen (S608), die Netzwerkadresse der Effektsteuerungseinrichtung (320) des zweiten Sitzes (210), die mit dem ersten Sitz (220) gemappt ist, zu verifizieren (S610), und die empfangene Effektsteuerinformation an die Effektsteuerungseinrichtung des zweiten Sitzes (210) weiterzuleiten (S612),
wobei die Effektsteuerungseinrichtung (320) des zweiten Sitzes (210) den Sitzeffekt des ersten Sitzes (220) in Übereinstimmung mit der Effektsteuerinformation, die durch die Zentralsteuereinrichtung (330) weitergeleitet wird, steuert (S616).

2. System zur Steuerung eines Sitzeffekts für eine Anlage zum Zeigen von Bildern, umfassend:
eine Effektsteuerungseinrichtung (310) eines ersten Sitzes (220), dafür eingerichtet, 4D-Effektsteuerinformation zu übertragen (S708), die von einem Benutzer an eine vorbestimmte Netzwerkadresse eingegeben wird (S706); und
eine Effektsteuerungseinrichtung (320) eines zweiten Sitzes (210), dafür eingerichtet, den bereitgestellten Effekt in Übereinstimmung mit der Effektsteuerinformation, die von der Effektsteuerungseinrichtung des ersten Sitzes mit einer vorbestimmten Netzwerkadresse übertragen wurde, zu steuern (S712), während sie einen Effekt, der mit einem Bild synchronisiert ist, an einen Benutzer bereitstellt, der auf dem ersten Sitz sitzt,
wobei die Effektsteuerungseinrichtung (310) des ersten Sitzes (220) und die Effektsteuerungseinrichtung (320) des zweiten Sitzes (210) im Voraus durch drahtlose Kommunikation miteinander netzwerkverbunden (S704) sind.

3. System zur Steuerung eines Sitzeffekts für eine Anlage zum Zeigen von Bildern gemäß Anspruch 1, bei dem:
die Effektsteuerungseinrichtung (320) des zweiten Sitzes (210) ein Ventil, das mit dem zweiten Sitz verbunden ist, steuert, das mit der empfangenen Effektart korrespondiert, wobei das Ventil eine Flussrate einer Düse, die mit dem Ventil verbunden ist, steuert.

4. System zur Steuerung eines Sitzeffekts für eine Anlage zum Zeigen von Bildern gemäß Anspruch 2, bei dem:
die Effektsteuerungseinrichtung (320) des zweiten Sitzes (210) Effektsteuerinformation, die die Effektart und ob oder ob nicht der Sitzeffekt bereitgestellt wird oder die Effektstärke enthält, von der Effektsteuerungseinrichtung (310) eines ersten Sitzes (220) empfängt (S708), ein mit dem zweiten Sitz verbundenes und mit der empfangenen Effektart der Effektsteuerinformation korrespondierendes Ventil in Übereinstimmung mit dem Empfangenen, ob oder ob nicht der Sitzeffekt bereitgestellt wird oder der Effektstärke, steuert, und die Flussrate einer Düse steuert, die mit dem Ventil verbunden ist.

5. System zur Steuerung eines Sitzeffektes für eine Anlage zum Zeigen von Bildern gemäß einem der vorhergehenden Ansprüche, bei dem:
die Effektsteuerungseinrichtung (320) des zweiten Sitzes (210) mindestens eines von einem Wasserschusseffekt, einem Luftschusseffekt und einem Dufteffekt an den Benutzer bereitstellt.

## Revendications

1. Un système pour contrôler un effet de siège pour une implantation pour montrer des images comprenant :
un dispositif pour contrôler l'effet (310) d'un premier siège (220) configuré pour transmettre (S608), saisies par un utilisateur à une adresse réseau prédéterminée, des informations de contrôle d'effet, incluant un type d'effet, si un effet de siège est fourni ou non, ou la force de l'effet ;
un système de contrôle d'effet (320) d'un second siège (210) configuré pour être placé à une ligne avant du premier siège (220) pour fournir (S616) un effet synchronisé avec une image pour un utilisateur qui est assis dans le premier siège (220) ; et
un système de contrôle central (330) configuré pour recevoir (S608) l'information de contrôle d'effet du système de contrôle d'effet (310) du premier siège (220) avec l'adresse réseau prédéterminée, vérifier (S610) l'adresse réseau du système de contrôle d'effet (320) du second siège (210) établie avec le premier siège (220), et relayer (S612) les informations du contrôle d'effet reçues vers le système de contrôle d'effet du second siège (210),
dans lequel le système de contrôle d'effet (320) du second siège (210) contrôle (S616) l'effet de siège du premier siège (220) selon les informations de contrôle d'effet relayées par le système de contrôle central (330).

2. Un système pour contrôler un effet de siège pour une implantation pour montrer des images comprenant :
un dispositif pour contrôler l'effet (310) d'un premier siège (220) configuré pour transmettre (S708), saisies par un utilisateur à une adresse réseau prédéterminée, des informations de contrôle d'effet 4D, (S706) ; et
un système de contrôle d'effet (320) d'un second siège (210) configuré pour contrôler (S712) l'effet produit selon les informations de contrôle d'effet transmise par le système de contrôle d'effet du premier siège avec une adresse réseau prédéterminée, tout en fournissant à un utilisateur qui est assis sur le premier siège un effet synchronisé avec une image,
dans lequel le dispositif de contrôle de l'effet (310) du premier siège (220) et le dispositif de contrôle d'effet (320) du deuxième siège (210) sont, à l'avance, connectés par réseau (S704) l'un à l'autre par communication sans fil.

3. Le système pour contrôler un effet de siège pour une implantation pour montrer des images de la revendication 1, dans lequel le dispositif de contrôle d'effet (320) du second siège (210) contrôle une valve connectée au second siège correspondant au type d'effet reçu, ladite valve contrôle un débit d'une buse connectée à la valve.

4. Le système pour contrôler un effet de siège pour une implantation pour montrer des images de la revendication 2, dans lequel le dispositif de contrôle d'effet (320) du second siège (210) reçoit (S708) des informations de contrôle d'effet, incluant le type d'effet et, si que l'effet de siège est fourni ou non, ou la force de l'effet, du dispositif de contrôle de l'effet (310) d'un premier siège (220), contrôle une valve connectée au second siège correspondant au type d'effet reçu des informations de contrôle d'effet selon la réception, si l'effet de siège est fourni ou non, ou la force de l'effet, et contrôle un débit d'une buse connectés à la valve.

5. Le système pour contrôler un effet de siège pour une implantation pour montrer des images d'une quelconque revendication précédente, dans lequel : le dispositif de contrôle d'effet (320) du second siège (210) fournit à l'utilisateur au moins l'un d'un effet de jet d'eau, un effet d'un jet d'air et un effet olfactif.
